# FASCICULE DE BREVET EUROPEEN

(11) **EP 3 393 836 B1**
(45) Date de publication et mention de la délivrance du brevet: **01.01.2020**
(21) Numéro de dépôt: 16815878.0
(22) Date de dépôt: 17.11.2016
(51) Int. Cl.: B60K 15/04, B60K 15/05

(54) **FIXATION D'UN ACTIONNEUR SUR UN BOÎTIER D'UNE TRAPPE À CARBURANT**
BEFESTIGUNG EINES AKTUATORS AN EINEM KRAFTSTOFFBEHÄLTERGEHÄUSE
ATTACHMENT OF AN ACTUATOR TO A FUEL TRAP HOUSING

(30) Priorité: 21.12.2015 FR 1562892
(43) Date de publication de la demande: 31.10.2018
(73) Titulaire: PSA AUTOMOBILES S.A., 78300 Poissy (FR)
(72) Inventeur: TAVERNIER, Luc, 25470 Trevillers (FR); GUESNEY, Emmanuel, 25700 Valentigney (FR); KRSTIC, Dragan, 90400 Danjoutin (FR)
(74) Mandataire: Fernandez, Francis Lionel
(86) Numéro de dépôt international: PCT/FR2016/052993
(87) Numéro de publication internationale: WO 2017/109308

(56) Documents cités:
- FR-A1- 2 870 299
- FR-A1- 3 016 854
- US-A1- 2014 117 679

## Description

L'invention a trait à la fixation d'un actionneur permettant le verrouillage/déverrouillage d'un volet d'une trappe à carburant.

Un véhicule automobile comprend une trappe à carburant, par laquelle l'utilisateur accède notamment au conduit permettant le remplissage du réservoir en carburant.

De manière générale, une trappe à carburant comprend un boîtier, monté en regard d'un orifice pratiqué dans un élément de carrosserie (généralement une aile arrière) du véhicule, et un volet, mobile par rapport au boîtier entre une position ouverte, dans laquelle le volet est angulairement écarté du boîtier pour permettre à l'utilisateur de remplir le réservoir via par exemple un pistolet présent dans une station-service, et une position fermée, dans laquelle le volet est plaqué contre le boîtier.

Un actionneur de verrouillage/déverrouillage est généralement fixé sur le boîtier, pour permettre de verrouiller/déverrouiller le volet lorsque celui-ci est en position fermée. Le verrouillage/déverrouillage du volet est piloté, par exemple par l'utilisateur, via un bouton présent sur la clef et/ou dans l'habitacle du véhicule.

Un actionneur comprend généralement, d'une part, une boîte comportant un doigt en saillie définissant un axe de rotation, et d'autre part, une tête située dans le boîtier et mobile par rapport à la boîte entre une position verrouillée, dans laquelle son positionnement empêche l'ouverture du volet, et une position déverrouillée, dans laquelle son positionnement autorise l'ouverture du volet.

L'actionneur est fixé sur le boîtier, via un dispositif de fixation.

A cet effet, on connaît du document FR 2 870 299, un dispositif de fixation comprenant:
- au moins deux protubérances coplanaires et angulairement décalées, ces protubérances faisant saillie radialement du doigt ;
- une découpe, ayant un profil extérieur équivalent au profil extérieur d'une section transversale du doigt à l'emplacement des protubérances ;
- un épaulement faisant saillie radialement du doigt.

L'actionneur est mobile autour de l'axe de rotation défini par le doigt, entre une position angulaire dite alignée, permettant le passage des protubérances au travers de la découpe, et une position angulaire dite désalignée, empêchant le passage des protubérances au travers de la découpe.

Plus précisément, dans ce dispositif de fixation de l'art antérieur, la découpe est pratiquée dans une paroi du boîtier.

Lors du montage de l'actionneur sur le boîtier, dans un premier temps, l'opérateur oriente l'actionneur en position alignée. Dans un second temps, l'opérateur introduit les protubérances dans le boîtier, via la découpe, jusqu'à ce que l'épaulement vienne en contact avec la paroi. A la suite de cette introduction, la tête est située dans le boîtier et la paroi est située entre épaulement et les protubérances. Enfin, l'opérateur tourne l'actionneur en position désalignée, pour obtenir son maintien, jusqu'à obtenir l'orientation de la tête souhaitée nécessaire à son fonctionnement.

Ce dispositif de fixation ne va pas sans inconvénients.

Premièrement, l'actionneur est disposé en porte à faux sur la paroi du boîtier. Ce type de fixation soumis aux vibrations issues par exemple des irrégularités de la route engendre avec le temps des déformations de la paroi et/ou des protubérances, néfastes au maintien de l'actionneur et à la coopération entre le tête et volet, et plus généralement au verrouillage/déverrouillage du volet.

Deuxièmement, l'actionneur est démontable manuellement par l'utilisateur, depuis le boîtier.

Troisièmement, le dispositif de fixation est visible depuis le boîtier.

Le document FR 3016854 décrit un ensemble selon le préambule de la revendication 1. Un premier objectif est de proposer un ensemble comprenant un boîtier, un volet, un actionneur et un dispositif de fixation permettant de fixer l'actionneur sur le boîtier, le dispositif de fixation résistant aux différentes sollicitations mécaniques.

Un deuxième objectif est de proposer un tel ensemble, dont le dispositif de fixation n'est pas démontable par l'utilisateur depuis le boîtier.

Un troisième objectif est de proposer un tel ensemble, dont le dispositif de fixation n'est pas visible depuis le boîtier.

Un quatrième objectif est de proposer un véhicule automobile comprenant un ensemble répondant aux objectifs exprimés ci-dessus.

A cet effet, il est proposé en premier lieu, un ensemble comprenant :
- un boîtier comprenant une paroi ;
- un volet mobile par rapport au boîtier ;
- un actionneur de verrouillage/déverrouillage du volet, cet actionneur comprenant :
   - une boîte comprenant un doigt en saillie définissant un axe de rotation ;
   - une tête mobile par rapport à la boîte et située dans le boîtier;
- un dispositif de fixation de l'actionneur au boîtier, ce dispositif comprenant :
   - au moins deux protubérances coplanaires et angulairement décalées, ces protubérances faisant saillie radialement du doigt
   - une découpe ayant un profil extérieur équivalent au profil extérieur d'une section transversale du doigt à l'emplacement des protubérances ;
   - un épaulement faisant saillie radialement du doigt ;
l'actionneur pivotant autour de l'axe de rotation entre une position alignée permettant le passage des protubérances au travers de la découpe et une position désalignée empêchant le passage des protubérances au travers de la découpe ;
l'ensemble étant tel que :
- la découpe est pratiquée dans une cloison du boîtier en regard de la paroi, cette découpe permettant l'introduction des protubérances entre la paroi et la cloison en position alignée et le maintien de l'actionneur en position désalignée ;
- l'épaisseur de la cloison est sensiblement égale à la dimension axiale définie entre l'épaulement et les protubérances ;
- le doigt est dans un trou pratiqué dans la paroi.

Diverses caractéristiques supplémentaires peuvent être prévues, seules ou en combinaison :
- les protubérances ont chacune en section transversale un profil extérieur distinct ;
- les protubérances sont diamétralement opposées ;
- la cloison est sensiblement parallèle à la paroi ;
- le boîtier comprend un renfoncement délimité par la paroi, un bord latéral et un bord inférieur, la cloison étant reliée conjointement au bord latéral et au bord inférieur ;
- le boîtier comprend un renfort reliant simultanément la paroi, le bord latéral et la cloison ;
- le boîtier comprend un emplacement délimité par une butée et un relief, l'actionneur étant encliqueté dans l'emplacement.

Il est proposé, en second lieu, un véhicule comprenant un ensemble tel que présenté précédemment.

D'autres caractéristiques et avantages de l'invention apparaîtront plus clairement et de manière concrète à la lecture de la description ci-après du mode de réalisation, laquelle est faite en référence aux dessins annexés dans lesquels :
- la figure 1 est une vue en perspective d'un véhicule automobile (en traits pointillés) comprenant un ensemble (en traits continus) comportant un boîtier, un volet, un actionneur fixé sur le boîtier via un dispositif de fixation ;
- la figure 2 est une vue en perspective de l'actionneur ;
- la figure 3 est une section de l'actionneur selon le plan III-III de la figure 2 ;
- la figure 4 est une vue en perspective de face du boîtier et du volet ;
- la figure 5 est une vue en perspective arrière du boîtier et du volet ;
- la figure 6 est une vue de détail en coupe du boîtier selon le plan VI-VI de la figure 5 ;
- la figure 7 est une vue en perspective illustrant l'introduction de l'actionneur ;
- la figure 8 est une vue en perspective, en coupe partielle, de l'actionneur en position intermédiaire ;
- la figure 9 est une vue en perspective, en coupe partielle, de l'actionneur en position finale.

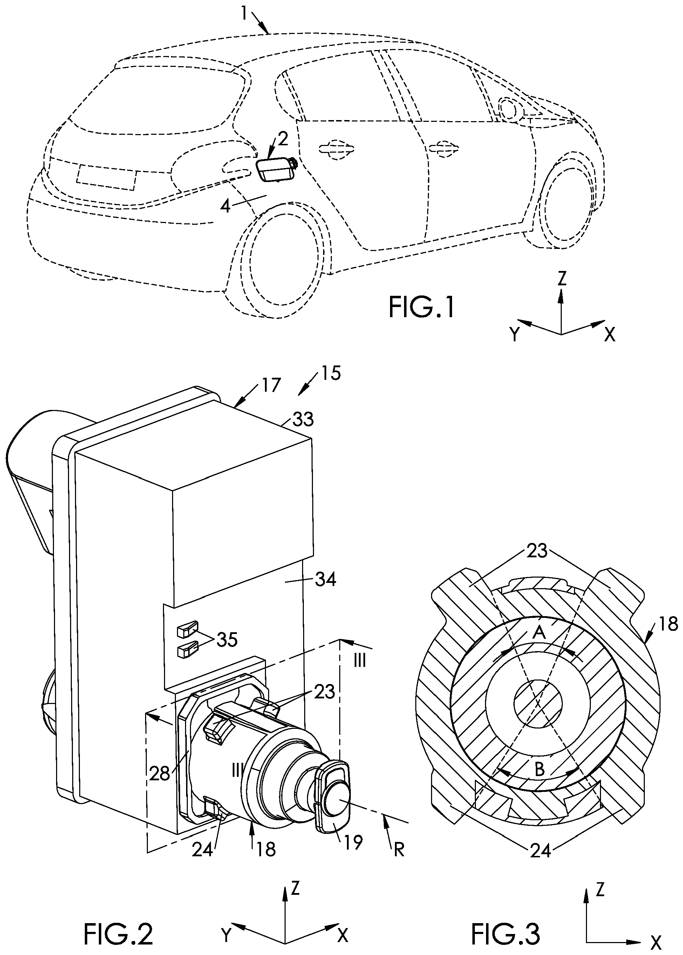

Sur la figure 1 est représenté un véhicule 1 automobile comprenant un ensemble 2 plus communément appelé trappe à carburant, cet ensemble 2 comportant un boîtier 3 placé en regard d'un orifice pratiqué dans un élément 4 de carrosserie, et en l'occurrence une aile arrière.

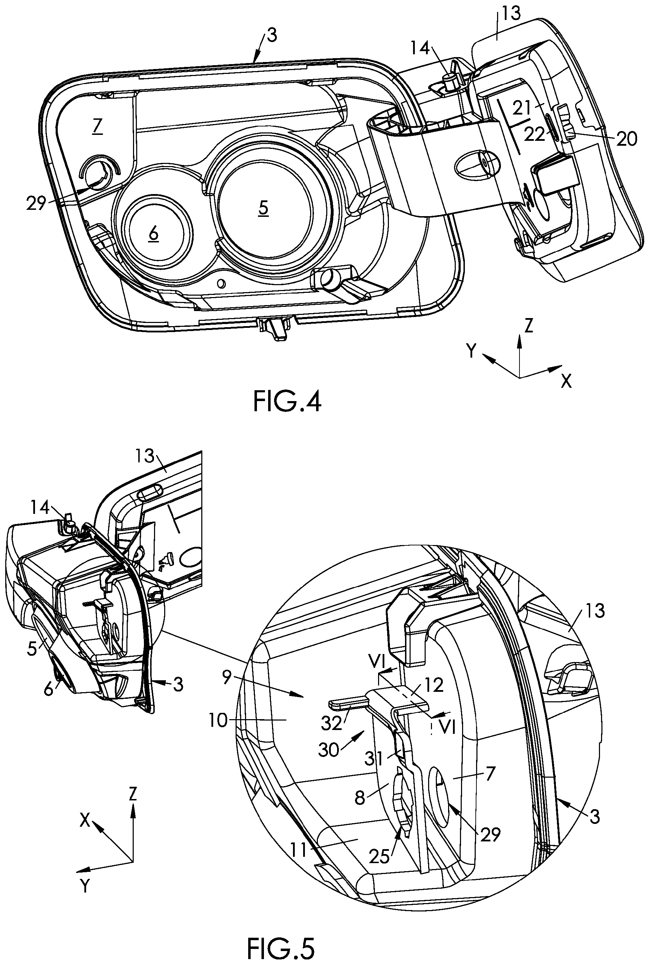

Selon le mode de réalisation illustré sur les figures, et plus précisément la figure 4, le boîtier 3 inclue une ouverture 5 primaire et une ouverture 6 secondaire, aptes à respectivement recevoir un conduit primaire (non représenté) et un conduit secondaire (non représenté) débouchant dans le boîtier 3, les conduits primaire et secondaire permettant, par exemple, de remplir un réservoir de carburant et un réservoir d'agent réducteur de pollution.

On définit par rapport au véhicule 1 un repère orthogonal XYZ comprenant trois axes perpendiculaires deux à deux, à savoir :
- un axe X, définissant une direction longitudinale, horizontale, confondue avec la direction générale de déplacement du véhicule,
- un axe Y, définissant une direction transversale, horizontale, qui avec l'axe X définit un plan XY horizontal,
- un axe Z, définissant une direction verticale, perpendiculaire au plan XY horizontal.

Le boîtier 3 comprend en outre une paroi 7 et une cloison 8 en regard la paroi 7.

Plus précisément, selon le mode de réalisation illustré sur les figures, et notamment la figure 5, le boîtier 3 est de forme générale parallélépipédique ou cylindrique et comprend un renfoncement 9 délimité par la paroi 7 verticale (suivant un plan XZ), un bord 10 latéral vertical (suivant un plan YZ) et un bord 11 inférieur horizontal (suivant un plan XY). La cloison 8 est située en regard de la paroi 7, espacée de la paroi 7, et reliée conjointement au bord 10 latéral et au bord 11 inférieur, la cloison 8 étant sensiblement parallèle à la paroi 7.

Le boîtier 3 comprend également, en partie supérieure, un renfort 12 horizontal reliant simultanément la paroi 7, le bord 10 latéral et la cloison 8, ce renfort 12 permettant de rigidifier la cloison 8.

La cloison 8 est avantageusement venue de matière avec le boîtier 3, le boîtier 3 étant réalisé par exemple par injection, en matériau polymère.

L'ensemble 2 comprend en outre un volet 13 articulé, via une charnière 14, par rapport au boîtier 3, entre une position ouverte (illustrée en figure 4), dans laquelle le volet 13 est angulairement écarté du boîtier 3 pour permettre à l'utilisateur de remplir le réservoir de carburant et/ou le réservoir d'agent réducteur, et une position fermée (illustrée en figure 1), dans laquelle le volet 13 est plaqué contre le boîtier 3.

L'ensemble 2 comprend également un actionneur 15 de verrouillage/déverrouillage, fixé sur le boîtier 3 via un dispositif 16 de fixation, cet actionneur 15 de verrouillage/déverrouillage permettant de verrouiller/déverrouiller le volet 13 lorsque celui-ci est en position fermée.

Dans la suite de la description, l'actionneur 15 de verrouillage/déverrouillage sera ci-après nommé actionneur 15.

L'actionneur 15 est, par exemple, électrique et piloté par l'utilisateur, via un bouton présent sur la clef et/ou dans l'habitacle du véhicule 1.

L'actionneur 15 comprend, d'une part, une boîte 17 comportant un doigt 18 en saillie définissant un axe R de rotation. L'actionneur 15 comprend, d'autre part, une tête 19 mobile par rapport à la boîte 17 et située dans le boîtier 3 à l'issue de sa fixation.

Selon le mode de réalisation illustré sur les figures, la boîte 17 se présente sous la forme d'un pavé droit, et le doigt 18 est sensiblement cylindrique.

Selon le mode de réalisation illustré sur les figures, et notamment la figure 2, le volet 13 comprend une cavité 20 délimitée par une façade 21 au sein de laquelle est pratiquée une lumière 22 de forme complémentaire à la tête 19. La tête 19 se présente sous la forme d'une languette, mobile en rotation autour de l'axe R de rotation, entre une position déverrouillée, dans laquelle la tête 19 est dans la cavité 20 et coïncide avec la lumière 22, de sorte à permettre l'ouverture du volet 13, et une position verrouillée, dans laquelle la tête 19 est dans la cavité 20 et ne coïncide pas avec la lumière 22, de sorte à empêcher l'ouverture du volet 13.

Le dispositif 16 de fixation comprend, d'une part, au moins deux protubérances 23, 24 coplanaires et angulairement décalées, ces protubérances 23, 24 faisant saillie radialement du doigt 18.

Selon le mode de réalisation illustré sur les figures, et notamment la figure 3, le dispositif 16 de fixation comporte une paire de protubérances 23 primaires ayant chacune, en section transversale (suivant un plan XZ), un profil rectangulaire et une paire de protubérances 24 secondaires ayant chacune, en section transversale (suivant un plan XZ), un profil de trapèze rectangle. Les protubérances 23 primaires sont diamétralement opposées aux protubérances 24 secondaires. Les protubérances 23 primaires sont angulairement décalées l'une par rapport à l'autre, par exemple d'un angle A de 37.5°. De la même manière, les protubérances 24 secondaires sont angulairement décalées l'une par rapport à l'autre, par exemple d'un angle B de 57.5°.

Les protubérances 23, 24 sont avantageusement venues de matière avec le doigt 18 et, par exemple, réalisées en matériau polymère.

Le dispositif 16 de fixation comprend, d'autre part, une découpe 25 pratiquée dans la cloison 8 et ayant un profil extérieur équivalent au profil extérieur d'une section transversale (suivant un plan XZ) du doigt 18 à l'emplacement des protubérances 23, 24.

Le fait d'avoir des protubérances 23, 24 avec des profils extérieurs différents est un détrompeur, évitant toute erreur de l'opérateur lors de l'introduction de l'actionneur 15 dans la découpe 25.

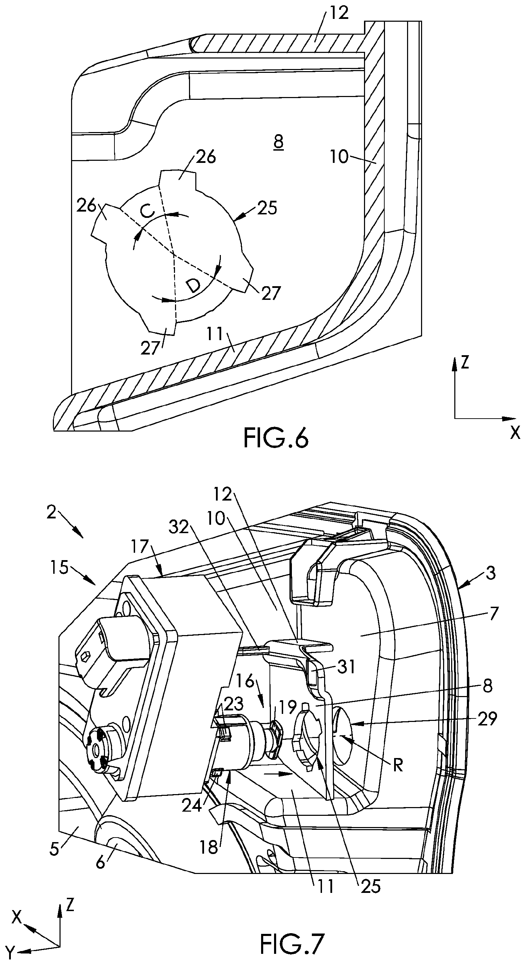

Selon le mode de réalisation illustré sur les figures, et notamment la figure 6, la découpe 25 est majoritairement circulaire et comporte une paire de rainures 26 primaires, ayant chacune un profil extérieur complémentaire à une protubérance 23 primaire, et une paire de rainures 27 secondaires, ayant chacune un profil extérieur complémentaire à une protubérance 24 secondaire. Les rainures 26 primaires sont diamétralement opposées aux rainures 27 secondaires.

Les rainures 26 primaires sont angulairement décalées l'une par rapport à l'autre, par exemple d'un angle C de 45°. De la même manière, les rainures 27 secondaires sont angulairement décalées l'une par rapport à l'autre, par exemple d'un angle D de 65°.

Le dispositif 16 de fixation comprend également un épaulement 28 faisant saillie radialement du doigt 18.

Selon le mode de réalisation illustré sur les figures, l'épaulement 28 est sensiblement rectangulaire et situé à l'interface entre la boîte 17 et le doigt 18.

Le dispositif 16 de fixation comprend, en outre, un trou 29 pratiqué dans la paroi 7, ce trou 29 étant apte à recevoir le doigt 18.

Selon le mode de réalisation illustré sur les figures, le trou 29 est circulaire et coaxial aux portions circulaires de la découpe 25.

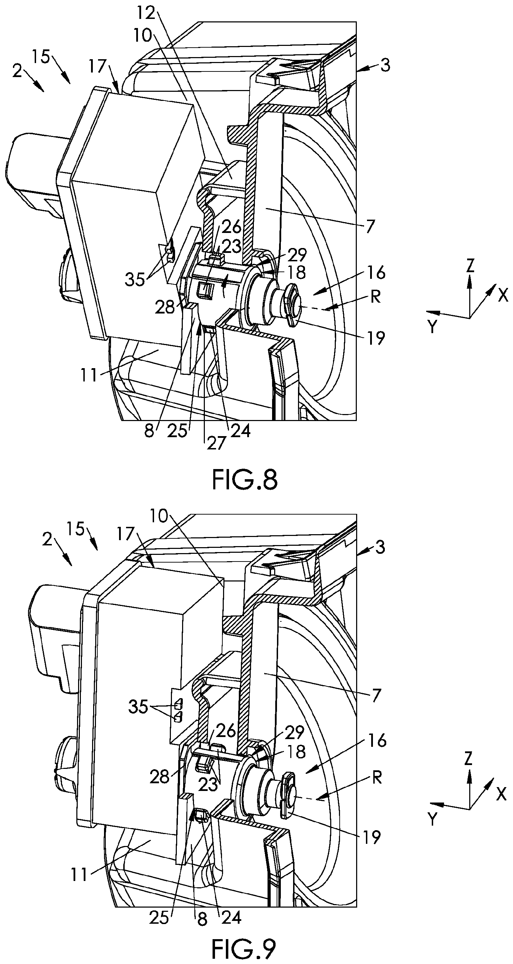

L'actionneur 15 est mobile autour de son axe R de rotation, entre une position angulaire dite alignée (illustrée sur les figures 7 et 8), permettant le passage des protubérances 23, 24 au travers de la découpe 25, et une position angulaire dite désalignée (illustrée sur la figure 9), empêchant le passage des protubérances 23, 24 au travers de la découpe 25.

On entend par position intermédiaire (illustrée sur la figure 8), la position de l'actionneur 15 (en position alignée) dans laquelle les protubérances 23, 24 sont situées entre la paroi 7 et la cloison 8, et le doigt 18 est situé dans le trou 29.

On entend par position finale (illustrée sur la figure 9), la position de l'actionneur 15 (en position désalignée) permettant l'introduction de la tête 19 dans la cavité 20 via la lumière 22 lorsque la tête 19 se trouve en position déverrouillée.

Selon le mode de réalisation illustré sur les figures, et notamment la figure 5, le boîtier 3 comprend un emplacement 30 délimité latéralement par un relief 31 faisant saillie de la cloison 8 et une butée 32 faisant saillie conjointement du bord 10 latéral et de la cloison 8. La boîte 17 se présente sensiblement sous la forme d'un pavé droit, et comprend une face 33 latérale et une face 34 frontale, ces faces 33, 34 latérale et frontale étant respectivement situées en regard du bord 10 latéral et de la cloison 8 lorsque l'actionneur 15 est en position finale. La boîte 17 comprend, en outre, deux ergots 35 en regard l'un de l'autre, faisant saillie de la face 34 frontale sensiblement à mi-hauteur. L'actionneur 15 est encliqueté dans l'emplacement 30, via l'introduction des ergots 35 dans l'emplacement 30, l'actionneur 15 étant dans sa position finale dès lors que celui-ci est encliqueté.

Dans la suite de la description, selon le mode de réalisation illustré, nous détaillerons chronologiquement les différentes étapes permettant la fixation de l'actionneur 15 sur le boîtier 3.

Lors d'une étape d'introduction (illustrée sur la figure 7), l'opérateur introduit le doigt 18 de l'actionneur 15 en position alignée, successivement dans la découpe 25 de la cloison 8 puis dans le trou 29, de sorte qu'à l'issue de cette étape d'introduction, l'actionneur 15 soit en position intermédiaire, autrement dit que les protubérances 23, 24 soient situées entre la paroi 7 et la cloison 8, le doigt 18 étant dans le trou 29.

Lors d'une étape de fixation (illustrée sur la figure 8), l'opérateur tourne l'actionneur 15 initialement en position intermédiaire, autour de son axe R de rotation (d'un angle de 30° selon l'exemple), de la position alignée à la position désalignée, de manière à assurer le maintien de l'actionneur 15 par rapport au boîtier 3, jusqu'à venir encliqueter l'actionneur 15 dans l'emplacement 30, l'actionneur 15 atteignant alors sa position finale (illustrée en figure 9).

L'épaisseur de la cloison 8 est sensiblement égale à la dimension axiale définie entre l'épaulement 28 et les protubérances 23, 24, pour permettre non seulement le passage manuel par l'opérateur de l'actionneur 15 d'une position à une autre, mais également d'obtenir, à l'issue de l'étape de fixation, un effort résultant issu des frottements entre l'épaulement 28 et la cloison 8 ainsi qu'entre la cloison 8 et les protubérances 23, 24, cet effort résultant s'opposant au mouvement de l'actionneur 15.

L'encliquetage de l'actionneur 15 permet de renforcer son immobilisation par rapport au boîtier 3.

L'ensemble 2 qui vient d'être décrit présente les avantages suivants.

Premièrement, le fait que le doigt 18 coopère avec le trou 29 dans la paroi 7, en complément de la fixation de l'actionneur 15 sur la cloison 8, permet de limiter les déplacements résiduels lors du roulage, et ainsi d'éviter toute déformation, au bénéfice de la fiabilité du verrouillage/déverrouillage du volet 13.

Deuxièmement, l'actionneur 15 n'est ni démontable ni visible depuis le boîtier 3.

Troisièmement, le montage de l'actionneur 15 est aisé. En effet, l'encliquetage de l'actionneur 15 dans l'emplacement 30 détermine sa position finale, autrement dit sa position de fonctionnement, au bénéfice de la productivité.

## Revendications

1. Ensemble (2) comprenant
- un boîtier (3) comprenant une paroi (7) ;
- un volet (13) mobile par rapport au boîtier (3) ;
- un actionneur (15) de verrouillage/déverrouillage du volet (13), cet actionneur (15) comprenant :
• une boîte (17) comprenant un doigt (18) en saillie définissant un axe R de rotation ;
• une tête mobile par rapport à la boîte (17) et située dans le boîtier (3) ;
- un dispositif (16) de fixation de l'actionneur (15) au boîtier (3), ce dispositif (16) comprenant :
• au moins deux protubérances (23, 24) coplanaires et angulairement décalées, ces protubérances (23, 24) faisant saillie radialement du doigt (18) ;
• une découpe (25) ayant un profil extérieur équivalent au profil extérieur d'une section transversale du doigt (18) à l'emplacement des protubérances (23, 24) ;
• un épaulement (28) faisant saillie radialement du doigt (18) ;
l'actionneur (15) pivotant autour de l'axe R de rotation entre une position alignée permettant le passage des protubérances (23, 24) au travers de la découpe (25) et une position désalignée empêchant le passage des protubérances (23, 24) au travers de la découpe (25) ;
**caractérisé en ce que**
- la découpe (25) est pratiquée dans une cloison (8) du boîtier (3) en regard de la paroi (7), cette découpe (25) permettant l'introduction des protubérances (23, 24) entre la paroi (7) et la cloison (8) en position alignée et le maintien de l'actionneur (15) en position désalignée ;
- l'épaisseur de la cloison (8) est sensiblement égale à la dimension axiale définie entre l'épaulement (28) et les protubérances (23, 24) ;
- le doigt (18) est dans un trou (29) pratiqué dans la paroi (7).

2. Ensemble (2) selon la revendication 1, **caractérisé en ce que** les protubérances (23, 24) ont chacune en section transversale un profil extérieur distinct.

3. Ensemble (2) selon l'une quelconque des revendications précédentes, **caractérisé en ce que** les protubérances (23, 24) sont diamétralement opposées.

4. Ensemble (2) selon l'une quelconque des revendications précédentes, **caractérisé en ce que** la cloison (8) est sensiblement parallèle à la paroi (7).

5. Ensemble (2) selon l'une quelconque des revendications précédentes, **caractérisé en ce que** le boîtier (3) comprend un renfoncement (9) délimité par la paroi (7), un bord (10) latéral et un bord (11) inférieur, la cloison (8) étant reliée conjointement au bord (10) latéral et au bord (11) inférieur.

6. Ensemble (2) selon la revendication 5, **caractérisé en ce que** le boîtier (3) comprend un renfort (12) reliant simultanément la paroi (7), le bord (10) latéral et la cloison (8).

7. Ensemble (2) selon l'une quelconque des revendications précédentes, **caractérisé en ce que** le boîtier (3) comprend un emplacement (30) délimité par une butée (32) et un relief (31), l'actionneur (15) étant encliqueté dans l'emplacement (30).

8. Véhicule (1) comprenant un ensemble (2) selon l'une des revendications des revendications précédentes.

## Patentansprüche

1. Montage (2), umfassend
- ein Gehäuse (3), das eine Wand (7) umfasst;
- eine Klappe (13), die bezüglich des Gehäuses (3) beweglich ist;
- einen Verriegelungs-/Entriegelungsaktuator (15) der Klappe (13), dieser Aktuator (15) umfassend:
• einen Behälter (17), das einen vorragenden Finger (18) umfasst, der eine Rotationsachse R definiert;
• einen Kopf, der bezüglich des Behälters (17) beweglich ist und sich in dem Gehäuse (3) befindet;
- eine Vorrichtung (16) zum Befestigen des Aktuators (15) an dem Gehäuse (3), diese Vorrichtung (16) umfassend:
• mindestens zwei koplanare und winkelig versetzte Ausstülpungen (23, 24), wobei diese Ausstülpungen (23, 24) radial von dem Finger (18) vorragen;
• einen Ausschnitt (25), der ein Außenprofil aufweist, das gleich dem Außenprofil eines Querschnitts des Fingers (18) an der Stelle der Ausstülpungen (23, 24) ist;
• einen Absatz (28), der radial von dem Finger (18) vorragt;
wobei der Aktuator (15) um die Rotationsachse R zwischen einer ausgerichteten Position, die das Durchgehen der Ausstülpungen (23, 24) durch den Ausschnitt (25) erlaubt, und einer nicht ausgerichteten Position, die das Durchgehen der Ausstülpungen (23, 24) durch den Ausschnitt (25) verhindert, schwenkt;
**dadurch gekennzeichnet, dass**
- der Ausschnitt (25) in einer Wand (8) des Gehäuses (3) gegenüber der Wand (7) angelegt ist, wobei dieser Ausschnitt (25) das Einführen der Ausstülpungen (23, 24) zwischen der Wand (7) und der Wand (8) in ausgerichteter Position und das Halten des Aktuators (15) in nicht ausgerichteter Position erlaubt;
- die Stärke der Wand (8) im Wesentlichen gleich dem axialen Maß ist, das zwischen dem Absatz (28) und den Ausstülpungen (23, 24) definiert ist;
- der Finger (18) sich in einem Loch (29), das in der Wand (7) angelegt ist, befindet.

2. Montage (2) nach Anspruch 1, **dadurch gekennzeichnet, dass** die Ausstülpungen (23, 24) im Querschnitt jeweils ein unterschiedliches Außenprofil aufweisen.

3. Montage (2) nach einem der vorstehenden Ansprüche, **dadurch gekennzeichnet, dass** die Ausstülpungen (23, 24) einander diametral entgegengesetzt sind.

4. Montage (2) nach einem der vorstehenden Ansprüche, **dadurch gekennzeichnet, dass** die Wand (8) im Wesentlichen zu der Wand (7) parallel ist.

5. Montage (2) nach einem der vorstehenden Ansprüche, **dadurch gekennzeichnet, dass** das Gehäuse (3) eine Vertiefung (9), die von der Wand (7) abgegrenzt ist, einen seitlichen Rand (10) und einen unteren Rand (11) umfasst, wobei die Wand (8) gemeinsam mit dem seitlichen Rand (10) und dem unteren Rand (11) verbunden ist.

6. Montage (2) nach Anspruch 5, **dadurch gekennzeichnet, dass** das Gehäuse (3) eine Verstärkung (12) umfasst, die gleichzeitig die Wand (7), den seitlichen Rand (10) und die Wand (8) verbindet.

7. Montage (2) nach einem der vorstehenden Ansprüche, **dadurch gekennzeichnet, dass** das Gehäuse (3) eine Stelle (30) umfasst, die von einem Anschlag (32) abgegrenzt ist, und ein Relief (31), wobei der Aktuator (15) in die Stelle (30) eingerückt ist.

8. Fahrzeug (1), das eine Montage (2) nach einem der vorstehenden Ansprüche Ansprüche umfasst.

## Claims

1. Assembly (2) comprising
- a housing (3) comprising a wall (7);
- a flap (13) that is movable with respect to the housing (3);
- an actuator (15) for the locking/unlocking of the flap (13), with this actuator (15) comprising:
• a box (17) comprising a protruding finger (18) defining an axis R of rotation;
• a head that is movable with respect to the box (17) and located in the housing (3);
- a device (16) for attaching the actuator (15) to the housing (3), with this device (16) comprising:
• at least two projections (23, 24) coplanar and angularly offset, with these projections (23, 24) protruding radially from the finger (18);
• a cut-out (25) that has an exterior profile equivalent to the exterior profile of a cross-section of the finger (18) at the location of the projections (23, 24);
• a shoulder (28) protruding radially from the finger (18); the actuator (15) pivoting about the axis R of rotation between an aligned position that allows for the passing of the projections (23, 24) through the cut-out (25) and a non-aligned position that prevents the passage of the projections (23, 24) through the cut-out (25); **characterised in that**
- the cut-out (25) is made in a partition wall (8) of the housing (3) facing the wall (7), this cut-out (25) allowing for the introduction of the projections (23, 24) between the wall (7) and the partition wall (8) in the aligned position and the maintaining of the actuator (15) in the non-aligned position;
- the thickness of the partition wall (8) is substantially equal to the axial dimension defined between the shoulder (28) and the projections (23, 24);
- the finger (18) is in a hole (29) made in the wall (7).

2. Assembly (2) according to claim 1, **characterised in that** the projections (23, 24) each have in a cross-section a separate exterior profile.

3. Assembly (2) according to any preceding claim, **characterised in that** the projections (23, 24) are diametrically opposed.

4. Assembly (2) according to any preceding claim, **characterised in that** the partition wall (8) is substantially parallel to the wall (7).

5. Assembly (2) according to any preceding claim, **characterised in that** the housing (3) comprises a recess (9) delimited by a wall (7), a lateral edge (10) and a lower edge (11), with the partition wall (8) being jointly connected to the lateral edge (10) and to the lower edge (11).

6. Assembly (2) according to claim 5, **characterised in that** the housing (3) comprises a reinforcement (12) that simultaneously connects the wall (7), the lateral edge (10) and the partition wall (8).

7. Assembly (2) according to any preceding claim, **characterised in that** the housing (3) comprises a location (30) delimited by an abutment (32) and a relief (31), with the actuator (15) being snap-fit into the location (30).

8. Vehicle (1) comprising an assembly (2) according to one of the preceding claims claims.
